# EUROPEAN PATENT APPLICATION

(11) **EP 4 686 738 A1**
(43) Date of publication of application: **04.02.2026**
(21) Application number: 24192169.1
(22) Date of filing: 31.07.2024
(51) Int. Cl.: C08L 77/02, C08G 64/18, C08G 69/14, C08G 77/448, G01S 13/931

(54) **POLYAMIDE COMPOSITIONS INCLUDING A CARBON-BASED FILLER FOR MICROWAVE ABSORBERS IN AUTOMOTIVE RADAR SENSOR ADAS APPLICATIONS**

(71) Applicant: SHPP Global Technologies B.V., 4612 PX Bergen op Zoom (NL)
(72) Inventor: SILVI, Norberto, Selkirk, 12158 (US)
(74) Representative: Modiano, Gabriella Diana

(57) **Abstract**

A thermoplastic composition includes: a) from about 30 wt% to about 85 wt% of a polyamide resin; b) from about 1 wt% to about 25 wt% of a polycarbonate-siloxane copolymer; c) from about 5 wt% to about 40 wt% of a glass fiber; and d) from about 0.01 wt% to less than 10 wt% of a carbon-based filler having a surface area of at least 5 m²/g. The composition exhibits a volume electrical resistivity of at least 1.0E+08 Ohm.cm as determined according to ASTM D257, the composition exhibits an ε' (real part of complex dielectric permittivity) of at least 5 and an ε" (imaginary part of complex dielectric permittivity) of no more than 4, and a molded sample of the composition exhibits a percent Absorbed Power measured in Transmission mode of at least 65% when observed according to a Free Space method at a frequency of 77 GHz.

## Description

### FIELD OF THE DISCLOSURE

The present disclosure relates to polyamide compositions, and in particular to polyamide compositions that include a carbon-based filler that have good dielectric and microwave absorption properties.

### BACKGROUND OF THE DISCLOSURE

According to the Association For Safe International Road Travel (ASIRT), nearly 1.3 million people (400,000 of them under the age of 25) die in road crashes each year, with at least 20 million people being injured or disabled. Road traffic crashes rank as the 9th leading cause of death, accounting for 2.2% of all deaths globally, and costing USD $518 billion globally, or about 1-2% of an individual countries' annual GDP. Unless action is taken, road traffic injuries are predicted to become the fifth leading cause of death by 2030 (Association For Safe International Road Travel - ASIRT, 2016). For these reasons, the automotive industry is increasingly making use of Advanced Driver Assistance Systems (ADAS) to provide drivers assistance with features such as adaptive cruise control, self-parking, back-up warning, blind spot detection, lane departure warning, collision avoidance, pedestrian detection, and many others. (Burger, R., Salinero, T., Sumida, S., "Beyond The Headlights: ADAS and Autonomous Sensing"; Market Report, Woodside Capital Partners; September 2016).

Electronic radar sensors are used in the automotive industry to aid drivers in operations such as cruise control, lane change, self-parking, blind spot detection and many others. These sensors need to be protected from electromagnetic interference that can damage their normal operation. Metals (aluminum, stainless steel) are the most common materials used for microwave (MW) shielding, but they are heavy, expensive and require complex processing to be shaped into a final part.

Polymer/carbon compositions are preferred due to their low density, low cost, moldability, and manufacturability into high volume molded parts. Carbon fillers trap or deflect MW radiation in enclosure walls, protecting the electronic sensors inside the cavity. Moderately high dielectric constant and electrical conductivity, and large dielectric and magnetic losses are some of the features desired for materials used in microwave shielding applications. In these cases, relatively small loadings of the carbon filler used for microwave interference is preferred to balance the dielectric performance of these materials with their ability to flow into molds for parts having small thicknesses. Lower loadings of carbon would also result in additional improvements to the ductility, impact strength, and surface aesthetics of these materials used in radar sensors for ADAS applications.

Microwave radiation (~1-300 GHz frequency, ~300-1 mm wavelength) is the most common source of electromagnetic energy used in the operation of radar sensors for automotive applications. Materials being used in ADAS applications to shield automotive safety sensors from damaging microwave electromagnetic radiation include: metals (aluminum, stainless steel, etc.); polymer composition materials containing metallic fillers such as aluminum flakes, stainless steel fibers or silver-coated polyamide fibers; metalized coatings; inherently conductive polymers such as polyacetylene, polypyrrole, polythiophene, and polyaniline; silicon carbide; ferrites (Fe₂O₃ with Ni/Zn/Cd/Co as a secondary oxide); iron silicide; and iron pentacarbonyl. Metals are the most common materials for microwave (MW) interference shielding, but they are heavy, expensive, and require complex processing to be shaped into a final part. Polymer/carbon compositions are preferred due to their low density, low cost, easy shaping, and manufacturability into high volume molded parts.

Carbon (powder, platelets, fibers, nanotubes, etc.) is emerging as a preferred filler to impart electromagnetic interference properties to thermoplastic polymers, which when unfilled are mostly transparent (non-absorbing, non-reflecting) to microwave radiation. When used in under-the-hood automotive enclosures, for example, polymer-carbon thermoplastic compositions can protect the sensors located inside the enclosure, thus preventing the electromagnetic radiation from an outside source to deteriorate the sensor's electronic performance. Also, carbon-containing elastomers such as silicone, polyurethane, and nitrile rubber, among several others, can be used as high-loss, protective, and deformable sheets or blankets to attenuate the resonant frequencies generated by the normal operation of the sensors inside a cavity. Besides thermoplastics and elastomers, these radar shielding materials are also sold commercially in the form of liquid paints, powder coatings and closed-cell polymer foams. Electrical conductivity, dielectric and magnetic losses, frequency of the incoming radiation, and thickness of the enclosure wall are some of the parameters that are believed to affect the microwave interference performance of these materials.

The choice of microwave shielding material to be used in a given application depends to some extent on the environment surrounding the electronic component (antenna, printed circuit board, imaging equipment for medical applications, etc.) to be protected. When the incoming radiation to be suppressed or minimized originates outside of the component to be protected, a material with reflecting microwave properties, such as a metallic plate (aluminum, stainless steel, etc.), a metallized plastic, or a polymer composition containing metallic fillers (such as those from SABIC's Faradex^{™} product line) may be sufficient. In this case, the enclosure protects the electronic components by reflecting the incoming radiation away from the cavity. If, however, the incoming radiation originates inside the cavity to be protected, a material that absorbs microwave energy may needed to isolate the sensor components from standing electromagnetic waves (oscillations) caused by cavity resonance. Microwave absorbers can also be used to cover the inside walls of testing anechoic chambers, thus eliminating unwanted reflections that would otherwise negatively affect the dielectric response of the material being tested inside the chamber.

There are several dielectric properties that designers consider when selecting materials for microwave radar interference, including but not limited to complex permittivity (real and imaginary parts), amount of radiation Absorbed, Reflected or Transmitted by the material, Shielding Effectiveness, Reflection Loss, and Attenuation. The frequency of the incoming radiation and the material's thickness are also important when trapping microwave energy that if not eliminated or minimized could interfere with the normal operation of the automotive electronic sensors.

Carbon (powder, platelets, fibers, nanotubes, etc.) is emerging as a preferred filler to impart electromagnetic interference properties to polymers, which when unfilled are virtually transparent to microwave radiation. When used in under-the-hood automotive enclosures, for example, polymer-carbon compositions can protect the radar sensors located inside the enclosure by preventing the electromagnetic radiation from an outside or inside source from deteriorating the sensor's electronic performance.

These and other shortcomings are addressed by aspects of the present disclosure.

### SUMMARY

Aspects of the disclosure relate to a thermoplastic composition including: a) from about 30 wt% to about 85 wt% of a polyamide resin; b) from about 1 wt% to about 25 wt% of a polycarbonate-siloxane copolymer; c) from about 5 wt% to about 40 wt% of a glass fiber; and d) from about 0.01 wt% to less than 10 wt% of a carbon-based filler having a surface area of at least 5 m²/g (square meters per gram) as determined using a Brunauer-Emmett-Teller (BET) surface area analysis. The composition exhibits a volume electrical resistivity of at least 1.0E+08 Ohm.cm as determined according to ASTM D257. The composition exhibits an ε' (real part of complex dielectric permittivity) of at least 5 and an ε" (imaginary part of complex dielectric permittivity) of no more than 4, wherein ε' and ε" are evaluated according to a Free Space Method. A molded sample of the composition exhibits a percent Absorbed Power measured in Transmission mode of at least 65% when observed according to a Free Space method at a frequency of 77 GHz. The combined weight percent value of all components does not exceed 100 wt. %, and all weight percent values are based on the total weight of the composition.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIGS. 1A and 1B are schematic depictions of the apparatus used to determine the dielectric properties of the materials of the disclosure using the Free Space Method for un-backed and metal-backed samples, respectively.
FIGS. 2A and 2B are graphs showing dielectric and microwave absorption properties for comparative and/or example compositions described in the disclosure.
FIGS. 3A and 3B are graphs showing dielectric and microwave absorption properties for comparative and/or example compositions described in the disclosure.
FIGS. 4A and 4B are graphs showing dielectric and microwave absorption properties for comparative and/or example compositions described in the disclosure.
FIGS. 5A and 5B respectively show Tables 5C and 5D which include mechanical properties for comparative and/or example compositions described in the disclosure.
FIGS. 6A and 6B are graphs showing dielectric and microwave absorption properties for comparative and/or example compositions described in the disclosure.
FIGS. 7A and 7B are graphs showing impact properties of comparative and/or example compositions described in the disclosure.
FIGS. 8A and 8B are graphs showing dielectric and microwave absorption properties for comparative and/or example compositions described in the disclosure.
FIGS. 9A and 9B are graphs showing dielectric and microwave absorption properties for comparative and/or example compositions described in the disclosure.

### DETAILED DESCRIPTION

The automotive industry is increasingly making use of electronic radar sensors to provide drivers assistance with features such as adaptive cruise control, parking/lane change assist, back-up warning, blind spot detection, collision avoidance, and many others. For these sensors to operate effectively, they need to be protected from spurious sources of electromagnetic radiation. Radar sensors for automotive applications, for example, comprise Radome-type plastic components, which are mostly transparent to microwave radiation, and Absorber-type plastic components, which trap microwave energy in a certain frequency range to protect the sensor from outside radiation interference. These plastic components are usually formed by injection molding a resin into the final part using relatively high injection pressures and melt temperatures. For these materials to flow into parts of relatively small thicknesses, the viscosity of the resin should be minimized so the resin can completely fill the mold. This situation usually requires the use of relatively small loadings of the carbon added to the formulation targeted for microwave interference applications.

The present disclosure describes plastic composition materials including relatively low levels of a carbon black powder, carbon fibers or multi-wall carbon nanotubes that can be used to manufacture microwave absorbers for automotive radar sensors. These materials provide adequate microwave absorption interference in the W-band of the electromagnetic spectrum and can be injection molded into relatively thin parts using the one-step or the two-step injection molding process.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyamide resin" includes mixtures of two or more polyamide resins.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Carbon-filled polyamides are used in applications requiring some level of electrical conductivity, especially in the conductive and electrostatic dissipation ranges, as well as some level of microwave interference at relatively high frequencies. In such cases, large carbon loadings typically result in materials of high viscosity (low flow) under injection molding conditions, and low impact strength and ductility, especially when these materials are used at temperatures below room temperature. It is in these situations that a relatively low loading of the carbon-based filler may be desired to achieve excellent flow, good low-temperature impact and high microwave shielding properties without adversely affecting the inherently good properties of the polyamide matrix.

Thermoplastic compositions according to aspects of the disclosure include a polyamide as the base resin and different carbon-based fillers to impart microwave interference properties to the formulation. Carbon fillers including carbon black powder, carbon fibers and carbon nanotubes (CNTs) from two different sources were considered. Carbon nanotubes may be provided in a form of a masterbatch including a polyamide matrix and a fixed loading of multi-wall carbon nanotubes. In some aspects, a Nylon 6 high flow resin may be included to dilute the original masterbatch to form blends of varying concentrations of nanotubes. The carbon nanotubes help to impart electrical conductivity and microwave interference properties to the composition. In certain aspects the CNT masterbatch includes Nanocyl's Plasticyl^{™} PA1701P, a multi-wall carbon nanotube (MWCNT) Nylon 6,6 masterbatch containing 17 percent by weight of NC7000^{™} nanotubes.

According to the manufacturer, "Plasticyl^{™} is a family of carbon nanotubes thermoplastic concentrates for applications requiring electrical conductivity together with good mechanical properties retention. CNT thermoplastics concentrates offer additional improvement in thermal dissipation, recyclability, flame retardancy, black tinting and microwave absorbing capability. These concentrates typically contain 10% to 20% of carbon nanotubes. Plasticyl^{™} is recommended for applications requiring a surface resistivity from 1 Ω to 10¹² Ω. Typical loadings for static dissipative applications are around 2% to 3% of carbon nanotubes in the final compound. The conductivity for a given loading depends primarily on the compounding conditions, the viscosity of the basic resin and the dilution equipment. As carbon nanotubes are produced in agglomerates, the dispersion process requires dedicated equipment and let-down procedures. In order for nanotubes to be effective in reducing the electrical resistivity and increasing the microwave absorbing capability of the polymer the nanotubes are dispersed in the nanotubes have to be uniformly dispersed in the host polymer matrix.

Nanocyl's nanotubes are thin, multi-wall CNTs produced via a catalytic chemical vapor deposition (CCVD) process. These carbon nanotubes are tube-shaped materials, exclusively composed of carbon atoms, having a nanometer size diameter. The graphite layers can be visualized somewhat like a rolled-up chicken wire with a continuous unbroken hexagonal mesh and carbon atoms at the apexes of the hexagons. With action of van der Waals forces, carbon nanotubes tend to cluster into bundles or agglomerates. Consequently, carbon nanotubes look like a black powder. At nanoscale, however, they have a spaghetti like structure. The NC7000^{™} nanotubes have an average diameter of about 9.5 nm, a length of 1.5 micron, a carbon purity of 90%, less than 1% transition metal oxides, a surface area of 250-300 m²/g, and a volume resistivity of 10⁻⁴ Ohm.cm.

The main advantage of carbon nanotubes is that they affect less the mechanical properties than other conductive fillers such as carbon blacks or graphite due to their high aspect ratio, resulting in a relatively low amount of nanotubes needed to reach a specific electrical conductivity. Nanotubes usually increase viscosity more than an equal loading of carbon black, but because a much lower quantity of nanotubes may be required, in most cases processing of compositions including CNTs is improved. Other benefits of the use of carbon nanotubes include high electrical conductivity, good processability, retention of key mechanical properties, high recyclability in thermoplastics, and thermal dissipation, among several others. See Nanocyl's Technical Data Sheet: NC7000™, 12 July 2016, V08.

Multiwall carbon nanotubes suitable for compositions according to aspects of the disclosure also include, but are not limited to, CNTs from Hyperion Catalysis International. These nanotubes are about 10 nanometers in diameter and 10 or more microns in length. They are made by a continuous, catalyzed gas phase reaction of low molecular weight hydrocarbons. Their high aspect ratio (1000:1) allows equivalent conductivity at lower loading compared to carbon black, chopped carbon fiber or stainless-steel fiber, and also a more advantageous retention of the inherent impact strength and ductility of the resin. Moreover, the relatively small size of these nanotubes, coupled with the low loading, results in parts of much improved surface aesthetics than when additives of smaller surface area are used. The Hyperion multiwall carbon nanotubes have a curvilinear structure. See Paper No. 2002-01-1037, "Nanotubes for Conductive Plastics Move to the Next Performance Level," Andrew Rich, Patrick Collins, and John Hagerstrom, Hyperion Catalysis International, 2002 Society of Automotive Engineers Inc.

A comparison of the Nanocyl and Hyperion CNT's is provided in Table 1:

**Table 1 - Comparison of MWCNTs**

| | **Hyperion** | **Nanocyl** |
|---|---|---|
| Product | Fibril^{™} | NC7000^{™} |
| Average Diameter (nm) | 10 | 9.5 |
| Average Length (µm) | 10 | 1.5 |
| Purity (%) | >90 | >90 |
| Surface Area (m²/g) | ~ 240 | 250-300 |

Compositions according to aspects of the disclosure may include from about 0.1 wt% to about 10 wt% of CNTs based on 100 wt% of the final formulation.

Carbon black powder may be used to impart electrical conductivity and microwave interference properties to the compositions described herein. In one aspect, the carbon black is Ensaco^{®} 360G, a highly structured and highly electrically conductive carbon black available from Imerys Graphite & Carbon. According to Imerys, this carbon black has a BET nitrogen surface area of 770 m²/g (ASTM D3037), an OAN (Oil Absorption Number) absorption of 320 ml/100 g (ASTM D2414), a volume electrical resistivity of 20 Ohm.cm, an oxygen content of at least 2,000 ppm, and a percolation concentration threshold in a high-density polyethylene resin of around 6-10 wt%.

Carbon fibers may be used in compositions according to aspects of the disclosure. In one aspect, the carbon fibers are Tenax^{™}-J HT C493 carbon fibers having a chopped length of 6 mm, supplied by Teijin/Toho Tenax America. Tenax^{™} chopped and milled carbon fibers are mainly used to enhance the mechanical and electrical properties of thermoplastic materials. In addition, the good electrical conductivity of carbon fibers allows for efficient electromagnetic interference shielding in a variety of applications. The type HT C493 carbon fibers included in the compositions described herein-which are supplied with a coating/sizing of 2.7% polyurethane-have a cut length of 6 mm and a bulk density of 620 g/l. Individual filaments with a diameter of 7 µm are combined into a fiber bundle with a diameter of 1-2 mm. The conductivity of these carbon fibers is about 7.2×10⁴ S/m, which corresponds to a volume electrical resistivity of about 0.00139 Ohm.cm. According to the manufacturer, Tenax^{™} chopped carbon fibers have excellent processability, resin compatibility, and translation of mechanical and electrical properties. Typical properties for Teijin/Toho Tenax America carbon fibers are shown in Table 2:

**Table 2 - Typical Properties of Tenax^{™} Carbon Fibers**

| **Filament Properties** | **Unit** | **Average Value** |
|---|---|---|
| Tensile strength | MPa | 4275 |
| Tensile modulus | GPa | 225 |
| Ultimate Elongation | % | 1.9 |
| Carbon Density | g/cm³ | 1.82 |
| Filament diameter | µm | 7 |
| Electrical resistivity | µΩ-cm | 1380 |
| | | |

| **Chopped Properties** | | |
|---|---|---|
| Fiber length | mm | 3, 6, 12, 25 |
| Moisture content | % | < 0.3 |
| Surface area (estimated) | m²/g | 10 |

As noted, the surface area of the Tenax^{™} carbon fibers is estimated to be 10 m2/g. The contribution to the surface area of these fibers is believed to be partially attributable to the fact that these fibers have a high internal porosity (fractal-like geometry). The internal morphology of the carbon-based filler can thus provide additional surface area to the filler.

Compositions according to aspects of the disclosure may further include graphite. In one aspect the graphite is a synthetic graphic, and in particular aspects the synthetic graphite is Asbury 1125, manufactured by Asbury Carbons, having a BET surface area of about 3.15 m²/g and a volume electrical resistivity of about 0.1082 Ohm.cm. Asbury 1125 has a particle size by sieve analysis (percent retained) of: 9.18% (80 mesh), 23.88% (100 mesh), 22.45% (140 mesh), 14.16% (200 mesh), and 13.14% (325 mesh).

In some aspects thermoplastic compositions include: a) from about 30 wt% to about 85 wt% of a polyamide resin; b) from about 1 wt% to about 25 wt% of a polycarbonate-siloxane copolymer; c) from about 5 wt% to about 30 wt% of a glass fiber; and d) from about 0.01 wt% to less than 10 wt% of a carbon-based filler having a surface area of at least 5 m²/g (square meters per gram). Surface area is determined using a Brunauer-Emmett-Teller (BET) surface area analysis. The composition exhibits a volume electrical resistivity of at least 1.0E+08 Ohm.cm as determined according to ASTM D257. The composition exhibits an ε' (real part of complex dielectric permittivity) of at least 5 and an ε" (imaginary part of complex dielectric permittivity) of no more than 4, wherein ε' and ε" are evaluated according to a Free Space Method. A molded sample of the composition exhibits a percent Absorbed Power measured in Transmission mode of at least 65% when observed according to a Free Space method at a frequency of 77 GHz. The combined weight percent value of all components does not exceed 100 wt. %, and all weight percent values are based on the total weight of the composition.

The polyamide resin may include, but is not limited to, polyamide 6 (PA6), polyamide 6,6 (PA66), polyamide 6,12, polyamide 6,10, polyamide 10,10, polyamide 4,10, polyamide 4,6, aromatic polyamide, semi-aromatic polyamide, a polyamide copolymer, or a combination thereof.

In certain aspects the composition includes at least 30 wt%, or at least 35 wt%, or at least 40 wt%, or at least 45 wt%, or at least 50 wt%, or at least 55 wt%, or at least 60 wt%, or at most 85 wt%, or at most 80 wt%, or at most 75 wt%, or at most 70 wt%, or at most 65 wt%, or at most 60 wt%, or at most 55 wt%, or at most 50 wt%, or at most 45 wt%, or at most 40 wt%, of the polyamide resin.

The polycarbonate-siloxane copolymer includes carbonate units and siloxane units. In certain aspects the carbonate unit is a bisphenol A polycarbonate homopolymer, and the siloxane unit is a eugenol-terminated polydimethylsiloxane, with the block copolymer having the formula:

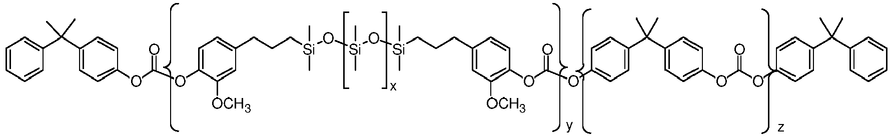

The polycarbonate-siloxane copolymer may have a siloxane content of from about 5 wt% to about 45 wt%, based on the total weight of the polycarbonate-siloxane copolymer, and a weight average molecular weight of between 20,000 and 45,000 g/mol as measured by gel permeation chromatography using a crosslinked styrene-divinyl benzene column, at a sample concentration of 1 milligram per milliliter, and as calibrated with bisphenol A polycarbonate standards.

SABIC has developed and commercialized polycarbonate-siloxane copolymer resins that offer a unique combination of flow, chemical resistance, hydrolytic stability, and low temperature ductility compared to polycarbonate homopolymers. In these materials, the elastomeric siloxane block forms nano-domains that are dispersed in the polycarbonate matrix. Properties of these resins are affected by the nano-domain size and the dispersion quality of the siloxane segments. LEXAN^{™} resin EXL1414, for instance, is a medium flow, opaque injection molding grade used in applications requiring extreme low temperature ductility (-40 °C) combined with good processability and mold release properties.

Thermoplastic homopolymer polycarbonates, on the other hand, are amorphous, clear, and high-performance polymers that exhibit inherent toughness, stiffness, transparency, and heat resistance. In some instances, however, a poor balance of some of the polymer's properties may restrict its use in certain end use applications. Polycarbonate resins for use in consumer electronics such as cell phones and laptop computers, for example, usually require a delicate balance between high flow and good impact strength and toughness. The use of polycarbonates of low molecular weight in these applications to achieve high flow in the molding of thin parts usually compromises the material's impact toughness and strength, especially in those cases when these materials are targeted for use in low temperature environments. It is in these specific cases that polycarbonate-siloxane copolymer resins may be used to improve the physical properties of homopolymer polycarbonates.

The soft, elastomeric siloxane block (Tg of about -123 °C) of the polycarbonate-siloxane copolymer contributes to the low temperature impact, flow, weatherability and release properties of the material, while the hard, thermoplastic polycarbonate block (Tg of 148 °C) contributes to the heat resistance and modulus performance of the copolymer.

In some aspects the polycarbonate-siloxane copolymer has a siloxane content of from about 5 wt% to about 45 wt%, such as from about 5 wt% to about 8 wt%, or about 6 wt%, or from about 15 wt% to about 25 wt%, or about 20 wt%, or from about 35 wt% to about 45 wt%, or about 40 wt%. Suitable polycarbonate-siloxane copolymers for use in compositions of the disclosure include, but are not limited to, a 20 wt% siloxane copolymer (PC-Si (20 wt%)) and a 40 wt% copolymer (PC-Si (40 wt%)), each of which are available from SABIC. The PC-Si (20 wt%) copolymer has a weight average molecular weight of about 30,000 g/mol; the siloxane component is a D45 eugenol-capped siloxane soft block for elastomeric resins. Silicone block lengths longer than D45 can result in compositions that have undesired haze and opacity, even when uniformly distributed in the polymer. The PC-Si (40 wt%) copolymer may be included to dilute the nylon-MWCNT masterbatch.

In specific aspects the composition includes from about 1 wt% to about 50 wt% of a polycarbonate-siloxane copolymer. In further aspects the composition includes at least 1 wt%, or at least 2 wt%, or at least 4 wt%, or at least 6 wt%, or at least 8 wt%, or at least 10 wt%, or at least 12 wt%, or at least 14 wt%, or at least 16 wt%, or at least 18 wt%, or at least 20 wt%, or at least 22 wt%, or at least 24 wt%, or at least 26 wt%, or at least 28 wt%, or at least 30 wt%, or at least 32 wt%, or at least 34 wt%, or at least 36 wt%, or at least 38 wt%, or at least 40 wt%, or at most 50 wt%, or at most 45 wt%, or at most 40 wt%, or at most 35 wt%, or at most 30 wt%, or at most 25 wt%, or at most 20 wt%, or at most 15 wt%, or at most 10 wt%, of the polycarbonate-siloxane copolymer.

The polycarbonate-siloxane copolymer may be included in the composition in an amount such that the total siloxane content of the composition is from about 1 wt% to about 10 wt%, including at least 1 wt%, or at least 2 wt%, or at least 3 wt%, or at least 4 wt%, or at least 5 wt%, or at least 6 wt%, or at most 10 wt%, or at most 9 wt%, or at most 8 wt%, or at most 7 wt%, or at most 6 wt%, or at most 5 wt%, or at most 4 wt%.

The composition may include from about 5 wt% to about 40 wt% of a glass fiber. The glass fiber may include, but is not limited to, round glass fiber, flat glass fiber, or a combination thereof. In particular aspects the composition includes at least 5 wt%, or at least 10 wt%, or at least 15 wt%, or at least 20 wt%, or at least 25 wt%, or at least 30 wt%, or at most 40 wt%, or at most 35 wt%, or at most 30 wt%, or at most 25 wt%, or at most 20 wt%, or at most 15 wt%, or at most 10 wt%, of the glass fiber.

The composition includes from about 0.01 wt% to less than 10 wt% of a carbon-based filler having a surface area of at least 5 m²/g (square meters per gram). Surface area is determined using a Brunauer-Emmett-Teller (BET) surface area analysis. The carbon based filler may include, but is not limited to, graphite, carbon fiber, carbon black, and carbon nanotubes having the recited surface area property. In a specific aspect the composition includes carbon nanotubes, such as multi-wall carbon nanotubes (MWCNTs). In further aspects the composition includes carbon nanotubes and further includes graphite, carbon fiber, carbon black, or a combination thereof.

In certain aspects the composition includes at least 0.01 wt%, or at least 0.05 wt%, or at least 0.1 wt%, or at least 0.2 wt%, or at least 0.25 wt%, or at least 0.5 wt%, or at least 0.75 wt%, or at least 1.0 wt%, or at least 1.25 wt%, or at least 1.5 wt%, or at least 1.75 wt%, or at least 2 wt%, or at least 2.25 wt%, or at least 2.5 wt%, or at least 2.75 wt%, or at least 3.0 wt%, or at least 3.5 wt%, or at least 4.0 wt%, or at least 4.5 wt%, or at least 5.0 wt%, or at least 5.5 wt%, or at least 6.0 wt%, or at least 6.5 wt%, or at least 7.0 wt%, or at least 7.5 wt%, or at least 8.0 wt%, or at most 10 wt%, or at most 9 wt%, or at most 8 wt%, or at most 7 wt%, or at most 6 wt%, or at most 5 wt%, or at most 4.5 wt%, or at most 4 wt%, or at most 3.75 wt%, or at most 3.5 wt%, or at most 3.25 wt%, or at most 3 wt%, of the carbon-based filler.

As noted, the carbon-based filler has a surface area of at least 5 m²/g as determined using a BET surface area analysis. In further aspects the carbon-based filler has a surface area of at least 6 m²/g, or at least 7 m²/g, or at least 8 m²/g, or at least 9 m²/g, or at least 10 m²/g, or at least 11 m²/g, or at least 12 m²/g, or at least 13 m²/g, or at least 14 m²/g, or at least 15 m²/g, or at least 20 m²/g, or at least 25 m²/g, or at least 30 m²/g, or at least 35 m²/g, or at least 40 m²/g, or at least 45 m²/g, or at least 50 m²/g, or at least 75 m²/g, or at least 100 m²/g, or at least 125 m²/g, or at least 150 m²/g, or at least 175 m²/g, or at least 200 m²/g, or at least 225 m²/g, or at least 250 m²/g, or at most 2500 m²/g, or at most 2400 m²/g, or at most 2300 m²/g, or at most 2200 m²/g, or at most 2100 m²/g, or at most 2000 m²/g, or at most 1900 m²/g, or at most 1800 m²/g, or at most 1700 m²/g, or at most 1600 m²/g, or at most 1500 m²/g, or at most 1400 m²/g, or at most 1300 m²/g, or at most 1200 m²/g, or at most 1100 m²/g, or at most 1000 m²/g, or at most 900 m²/g, or at most 800 m²/g, or at most 700 m²/g, or at most 600 m²/g, or at most 500 m²/g, or at most 400 m²/g, or at most 300 m²/g.

In further aspects the composition exhibits a volume electrical resistivity of at least 1.0E+08 Ohm.cm as determined according to ASTM D257. In specific aspects the composition has a volume electrical resistivity of at least 1.0E+09 Ohm.cm, or at least 1.0E+10 Ohm.cm, or at least 1.0E+11 Ohm.cm, or at least 1.0E+12 Ohm.cm, or at least 1.0E+13 Ohm.cm, or at least 1.0E+14 Ohm.cm, as determined according to ASTM D257

The composition exhibits an ε' (real part of complex dielectric permittivity) of at least 5 and an ε" (imaginary part of complex dielectric permittivity) of no more than 4, wherein ε' and ε" are evaluated according to a Free Space Method. In further aspects the composition exhibits an ε' of at least 5, or at least 5.5, or at least 6, or at least 6.5, or at least 7, or at least 7.5, or at least 8, or at least 8.5, or at least 9, or at least 9.5, or at least 10, or at least 10.5, or at least 11, or at least 11.5, or at least 12. In particular aspects the composition exhibits an ε" of at least 1.6, or at least 1.7, or at least 1.8, or at least 1.9, or at least 2.0, or at least 2.1, or at least 2.2, or at least 2.3, or at least 2.4, or at least 2.5, or at least 2.6, or at least 2.7, or at least 2.8, or at least 2.9, or at least 3.0, or at least 3.1, or at least 3.2, or at least 3.3, or at least 3.4, or at least 3.5, or at least 3.6. In yet further aspects ε"/ε' (tan δ) is from 0.1 to 0.4.

A molded sample of the composition exhibits a percent Absorbed Power measured in Transmission mode of at least 65% when observed according to a Free Space method at a frequency of 77 GHz. In particular aspects the composition exhibits a percent Absorbed Power measured in Transmission mode of at least 66%, or at least 67%, or at least 68%, or at least 69%, or at least 70%, or at least 71%, or at least 72%, or at least 73%, or at least 74%, or at least 75%, or at least 76%, or at least 77%, when observed according to a Free Space method at a frequency of 77 GHz.

In a certain aspect the composition includes no more than 0.5 wt% of a carbon fiber, and wherein the composition exhibits a percent Absorbed Power measured in Transmission mode of at least 75% when observed according to a Free Space method at a frequency of 77 GHz.

In another aspect the composition includes no more than 3 wt% of carbon black, and wherein the composition exhibits a percent Absorbed Power measured in Transmission mode of at least 70% when observed according to a Free Space method at a frequency of 77 GHz.

In other aspects:
the carbon-based filler includes MWCNTs including a surface area of from 200-250 m²/g, the composition includes from greater than 1 wt% to about 5 wt% of the MWCNTs, and the composition exhibits a percent Absorbed Power measured in Transmission mode of at least 70% when observed according to a Free Space method at a frequency of 77 GHz; or
the carbon-based filler includes MWCNTs including a surface area of from 250-300 m²/g, the composition includes from about 1 wt% to about 2 wt% of the MWCNTs, and the composition exhibits a percent Absorbed Power measured in Transmission mode of at least 75% when observed according to a Free Space method at a frequency of 77 GHz.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In specific aspects the article is a component of a radar sensor, camera, or electronic control unit (ECU). In further aspects the article includes at least two openings to allow a transmission of microwave radiation between a transmitting antenna and a receiving antenna located in a printed circuit board of the article.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
a) from about 30 wt% to about 85 wt% of a polyamide resin;
b) from about 1 wt% to about 25 wt% of a polycarbonate-siloxane copolymer;
c) from about 5 wt% to about 40 wt% of a glass fiber; and
d) from about 0.01 wt% to less than 10 wt% of a carbon-based filler having a surface area of at least 5 m²/g (square meters per gram),
wherein
surface area is determined using a Brunauer-Emmett-Teller (BET) surface area analysis,
the composition exhibits a volume electrical resistivity of at least 1.0E+08 Ohm.cm as determined according to ASTM D257,
the composition exhibits an ε' (real part of complex dielectric permittivity) of at least 5 and an ε" (imaginary part of complex dielectric permittivity) of no more than 4, wherein ε' and ε" are evaluated according to a Free Space Method,
a molded sample of the composition exhibits a percent Absorbed Power measured in Transmission mode of at least 65% when observed according to a Free Space method at a frequency of 77 GHz, and
the combined weight percent value of all components does not exceed 100 wt. %, and all weight percent values are based on the total weight of the composition.

Aspect 2. The thermoplastic composition according to Aspect 1, wherein the carbon-based filler comprises multi-wall carbon nanotubes (MWCNTs).

Aspect 3. The thermoplastic composition according to Aspect 2, wherein the composition further comprises graphite, carbon fiber, carbon black, or a combination thereof.

Aspect 4. The thermoplastic composition according to any of Aspects 1 to 3, wherein the polycarbonate-siloxane copolymer has a siloxane content of from 5 wt% to 45 wt%.

Aspect 5. The thermoplastic composition according to Aspect 4, wherein the polycarbonate-siloxane copolymer has a siloxane content of from 35 wt% to 45 wt%.

Aspect 6. The thermoplastic composition according to any of Aspects 1 to 5, wherein the composition comprises from about 10 wt% to about 20 wt% of the glass fiber.

Aspect 7. The thermoplastic composition according to any of Aspects 1 to 6, wherein the glass fiber comprises round glass fiber, flat glass fiber, or a combination thereof.

Aspect 8. The thermoplastic composition according to any of Aspects 1 to 7, wherein the composition has a total siloxane content of from about 4 wt% to about 6 wt%.

Aspect 9. The thermoplastic composition according to any of Aspects 1 to 8, wherein a molded sample of the composition exhibits a percent Absorbed Power measured in Transmission mode of at least 70% when observed according to a Free Space method at a frequency of 77 GHz.

Aspect 10. The thermoplastic composition according to any of Aspects 1 to 9, wherein the polyamide resin comprises polyamide 6 (PA6), polyamide 6,6 (PA66), polyamide 6,12, polyamide 6,10, polyamide 10,10, polyamide 4,10, polyamide 4,6, aromatic polyamide, semi-aromatic polyamide, a polyamide copolymer, or a combination thereof.

Aspect 11. The thermoplastic composition according to any of Aspects 1 to 10, wherein the composition comprises no more than 0.5 wt% of a carbon fiber, and wherein the composition exhibits a percent Absorbed Power measured in Transmission mode of at least 75% when observed according to a Free Space method at a frequency of 77 GHz.

Aspect 12. The thermoplastic composition according to any of Aspects 1 to 11, wherein the composition comprises no more than 3 wt% of carbon black, and wherein the composition exhibits a percent Absorbed Power measured in Transmission mode of at least 70% when observed according to a Free Space method at a frequency of 77 GHz.

Aspect 13. The thermoplastic composition according to any of Aspects 1 to 12, wherein:
the carbon-based filler comprises MWCNTs comprising a surface area of from 200-250 m²/g, the composition comprises from greater than 1 wt% to about 5 wt% of the MWCNTs, and the composition exhibits a percent Absorbed Power measured in Transmission mode of at least 70% when observed according to a Free Space method at a frequency of 77 GHz; or
the carbon-based filler comprises MWCNTs comprising a surface area of from 250-300 m²/g, the composition comprises from about 1 wt% to about 2 wt% of the MWCNTs, and the composition exhibits a percent Absorbed Power measured in Transmission mode of at least 75% when observed according to a Free Space method at a frequency of 77 GHz.

Aspect 14. An article comprising the thermoplastic composition according to any of Aspects 1 to 13.

Aspect 15. The article according to Aspect 14, wherein the article is a component of a radar sensor, camera, or electronic control unit (ECU).

Aspect 16. The article according to Aspect 14 or 15, wherein the article comprises at least two openings to allow a transmission of microwave radiation between a transmitting antenna and a receiving antenna located in a printed circuit board of the article.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein included one or more of the components listed in Table 3:

**Table 3 - Components**

| **Component** | **Description** | **Source** |
|---|---|---|
| PA6 | Polyamide/nylon-6, low amino end group (AEG) content, Nylene^{®} RD963 | Custom Resins |
| PC-Si (20) | Polycarbonate-siloxane copolymer, 20 wt% siloxane | SABIC |
| PC-Si (40) | Polvcarbonate-siloxane copolymer, 40 wt% siloxane | SABIC |
| GF | Glass fibers, round, 10 µm diameter, PPG 3540 | PPG |
| CB | Carbon black, Ensaco^{®} 360G, surface area 770 m²/g | Imervs |
| CF | Carbon fibers, Tenax^{™}-J HT C493, 6 mm, surface area 10 m²/g (estimated) | Teijin/Toho Tenax America |
| Graphite | Synthetic graphite, Asburv 1125, surface area 3.15 m²/g | Asbury Carbons |
| CNT MB 1 | Multi-wall carbon nanotube masterbatch, 20 wt% MWCNTs (surface area ~240 m²/g) in polyamide 6,6 | Hyperion |
| CNT MB2 | Plasticyl^{™} PA1701P multi-wall carbon nanotube masterbatch, 17 wt% MWCNTs (surface area 250-300 m²/g) in polyamide 6,6 | Nanocyl |

### Example 1

Samples of the compositions described herein were prepared by extruding the listed components into pellets and then injection molding samples from the pellets. The extrusion and molding processes were performed according to conventional means. Thermoplastic compositions shown in Tables 4A and 4B were prepared:

**Table 4A - Nylon-Based Compositions**

| **Component** | **C1.1** | **Ex1.2** | **Ex1.3** | **Ex1.4** | **C1.5** | **Ex1.6** |
|---|---|---|---|---|---|---|
| PA6 | 64 | 62 | 60 | 58 | 64.9 | 64.5 |
| PC-Si (40) | 15 | 15 | 15 | 15 | 15 | 15 |
| GF | 20 | 20 | 20 | 20 | 20 | 20 |
| CB | 1 | 3 | 5 | 7 | | |
| CF | | | | | 0.1 | 0.5 |
| CNT MB1 | | | | | | |
| **Total (wt%)** | 100 | 100 | 100 | 100 | 100 | 100 |
| **CNTs in blend (wt%)** | | | | | | |

**Table 4B - Nylon-Based Compositions**

| **Component** | **Ex1.7** | **C1.8** | **C1.9** | **C1.10** | **Ex1.11** | **Ex1.12** |
|---|---|---|---|---|---|---|
| PA6 | 64 | 62 | 64.5 | 62.5 | 60 | 50 |
| PC-Si (40) | 15 | 15 | 15 | 15 | 15 | 15 |
| GF | 20 | 20 | 20 | 20 | 20 | 20 |
| CB | | | | | | |
| CF | 1 | 3 | | | | |
| CNT MB1 | | | 0.5 | 2.5 | 5 | 15 |
| **Total (wt%)** | 100 | 100 | 100 | 100 | 100 | 100 |
| **CNTs in blend (wt%)** | | | 0.1 | 0.5 | 1 | 3 |

Various microwave properties of the Table 4A and 4B compositions were tested at a frequency of 77 gigahertz (GHz); results are shown in Tables 5A and 5B:

**Table 5A - Dielectric/Microwave Properties of Table 4A Compositions**

| **Properties** | **C1.1** | **Ex1.2** | **Ex1.3** | **Ex1.4** | **C1.5** | **Ex1.6** |
|---|---|---|---|---|---|---|
| ε' | 3.812 | 5.370 | 6.911 | 8.662 | 3.880 | 6.243 |
| ε" | 0.169 | 0.627 | 1.084 | 1.662 | 0.242 | 1.074 |
| ε"/ε' (tan δ) | 0.044 | 0.117 | 0.157 | 0.192 | 0.062 | 0.172 |
| Attenuation Constant (dB/cm) | -6.075 | -18.923 | -28.801 | -39.364 | -8.593 | -30.000 |
| Total Shielding Effectiveness (dB) | 2.233 | 7.362 | 11.705 | 14.726 | 3.199 | 10.635 |
| RL Measured (Metal-Backed) (dB) | -2.025 | -5.797 | -7.549 | -5.289 | -2.927 | -7.679 |
| RL Calculated (Metal-Backed) (dB) | -1.865 | -4.781 | -8.705 | -6.168 | -2.588 | -6.505 |
| % Power in Metal-Backed Reflection (Absorption) | 37.27 | 73.68 | 82.42 | 70.41 | 49.03 | 82.93 |
| % Power in Transmission (Reflected) | 1.90 | 11.32 | 24.49 | 26.69 | 3.31 | 14.26 |
| % Power in Transmission (Absorbed) | 38.31 | 70.33 | 68.76 | 69.94 | 48.82 | 77.10 |
| % Power in transmission (Transmitted) | 59.79 | 18.36 | 6.75 | 3.37 | 47.87 | 8.64 |

**Table 5B - Dielectric/Microwave Properties of Table 4B Compositions**

| **Properties** | **Ex1.7** | **C1.8** | **C1.9** | **C1.10** | **Ex1.11** | **Ex1.12** |
|---|---|---|---|---|---|---|
| ε' | 8.755 | 11.100 | 3.637 | 4.330 | 5.532 | 11.414 |
| ε" | 1.901 | 6.089 | 0.124 | 0.308 | 0.670 | 3.672 |
| ε"/ε' (tan δ) | 0.217 | 0.549 | 0.034 | 0.071 | 0.121 | 0.322 |
| Attenuation Constant (dB/cm) | -44.728 | -123.707 | -4.549 | -10.373 | -19.898 | -75.180 |
| Total Shielding Effectiveness (dB) | 15.841 | 41.550 | 1.773 | 4.430 | 7.639 | 26.048 |
| RL Measured (Metal-Backed) (dB) | -5.864 | -3.267 | -4.389 | -12.463 | -5.729 | -5.503 |
| RL Calculated (Metal-Backed) (dB) | -6.627 | -4.827 | -1.489 | -5.036 | -5.222 | -5.111 |
| % Power in Metal-Backed Reflection (Absorption) | 74.08 | 52.87 | 63.60 | 94.33 | 73.27 | 71.84 |
| % Power in Transmission (Reflected) | 28.82 | 42.70 | 1.52 | 14.32 | 13.31 | 27.00 |
| % Power in Transmission (Absorbed) | 68.58 | 57.29 | 32.01 | 49.62 | 69.47 | 72.75 |
| % Power in transmission (Transmitted) | 2.61 | 0.01 | 66.48 | 36.06 | 17.22 | 0.25 |

Compositions C1.1, Ex1.2, Ex1.3 and Ex1.4 included, respectively, 1 w%, 3 w%, 5 wt%, and 7 wt% of Ensaco^{®} 360G carbon black powder. Compositions C1.5, Ex1.6, Ex1.7 and C1.8 included, respectively, 0.1 wt%, 0.5 wt%, 1 wt%, and 3 wt% of carbon fibers. Compositions C1.9, C1.10, Ex1.11 and Ex1.12 included, respectively, 0.5 wt%, 2.5 wt%, 5 wt%, and 15 wt% of a masterbatch containing polyamide 6,6 with 20 wt% of Hyperion multi-wall carbon nanotubes; the concentration of carbon nanotubes in these formulations 0.1 wt%, 0.5 wt%, 1 w%, and 3 wt%, respectively. Tables 5A and 5B show a maximum microwave absorption at 77 GHz of 70.3% (3 wt% Ensaco^{®} 360G carbon black, composition Ex1.2), 77.1% (0.5 wt% of carbon fibers composition Ex1.6), and 72.8% (3 wt% of carbon nanotubes, composition Ex1.12).

These results highlight the fact that microwave absorption depends, for the same filler loading, on the type of carbon filler added to the composition. Carbon fibers and CNTs, added in exactly the same concentration of 0.1, 0.5, 1 and 3 wt%, produced different microwave absorption values at 77GHz: 49% vs 32% at 0.1wt%, 77% vs 50% at 0.5wt%, 68.6% vs 69.5% at 1wt%, and 57% vs 73% at 3wt%, respectively.

Dielectric properties of the compositions described herein may be evaluated according to a Free Space Method. The Free Space Method includes a vector network analyzer, two antennae facing each other with a sample holder placed equidistant between them. The fundamental experimental quantities produced by the Free Space Method are referred to as Scattering parameters, or S-parameters, which are used to describe the input-output relationship between the different ports of an electric network in terms of amplitude and phase versus frequencies. The S-parameters are usually identified by a two-number subscript, with the first number in the subscript referring to the responding port, while the second number refers to the incident port. Thus, S21 means the response at port 2 due to a signal at port 1. The Scattering parameters are complex numbers having a real part and an imaginary part, and they describe the amount of microwave radiation that is either reflected off the sample or transmitted through the sample. The Scattering parameter S11 for Reflection, for example, represents a signal that originates in antenna 1 and that is received back at the same antenna after impinging on the sample and is reflected off. Similarly, the Scattering parameter S21 for Transmission represents a signal that originates in antenna 1 and is received by antenna 2 after being transmitted through the material under test. Scattering parameters for Reflection and Transmission that represent a signal that originates at antenna 2, S22 for Reflection and S12 for Transmission, can also be defined. The S-parameter matrix can be used to determine reflection coefficients and transmission gains from both sides of a two-port network for which four S-parameters, S11, S22, S21, and S12, as defined before, can be identified. A software is then used to convert the Scattering parameter output of the network analyzer to dielectric properties. Free-space measurement techniques provide a method for determining the dielectric permittivity and magnetic permeability of the magneto-dielectric material under test. These methods are contactless, that is the material under test does not make direct contact with any active component of the equipment involved in the measurement.

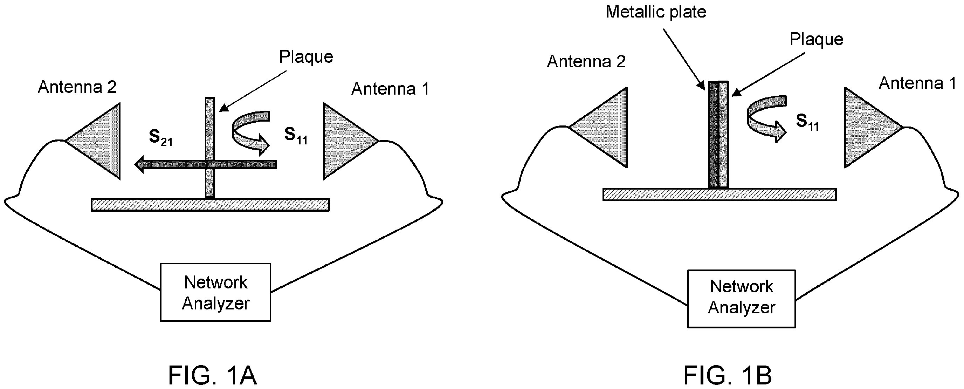

A schematic depiction of the apparatus used to determine the dielectric properties of the materials of this disclosure using the Free Space Method for un-backed and metal-backed samples is shown in FIGS. 1A and 1B, respectively. Injection molded plaques of 6 inch × 8 inch × 1/8 inch dimensions are used for these Free Space dielectric measurements.

Dielectric measurements using the Free Space Method can be performed in two different modes, the Transmission Mode and the Metal-backed Reflection Mode. The Transmission Mode of measurement measures three types of radiation: Absorption into the sample; Reflection off the sample; and Transmission through the sample. In the Metal-backed Reflection Mode of measurement, a metallic plate (stainless steel, aluminum, etc.) is placed between the material under test and the receiving antenna so transmission through the sample is completely suppressed, and only microwave Absorption into the material and microwave Reflection off the material can be evaluated. As the combination of the two antennae in Transmission mode can only measure the Scattering parameter for Reflection, S11, and the Scattering parameter for Transmission, S21, the amount (in percent) of radiation absorbed by the material under test is calculated as the difference between the total energy impinging on the sample (or 100%) and the sum of the amount (in percent) of radiation transmitted through the sample (measured from S21, and reaching the receiving antenna) and reflected off the sample (measured from S11, and returning back to the emitting antenna). In many applications, it is desirable to maximize percent Absorbed power, and to minimize percent Reflected power and percent Transmitted power when measurements are made using the Transmission mode. There are several dielectric properties that radar designers consider when selecting materials for microwave radar interference applications. Complex permittivity (real and imaginary parts), amount of radiation Absorbed, Reflected or Transmitted by the material, Shielding Effectiveness, Reflection Loss, and Attenuation are only some of the material properties of interest for the manufacture of plastic components for radar sensor applications. Frequency of the incoming radiation and material thickness are also important when trapping microwave energy that if not eliminated or minimized would interfere with the normal operation of the automotive electronic sensors.

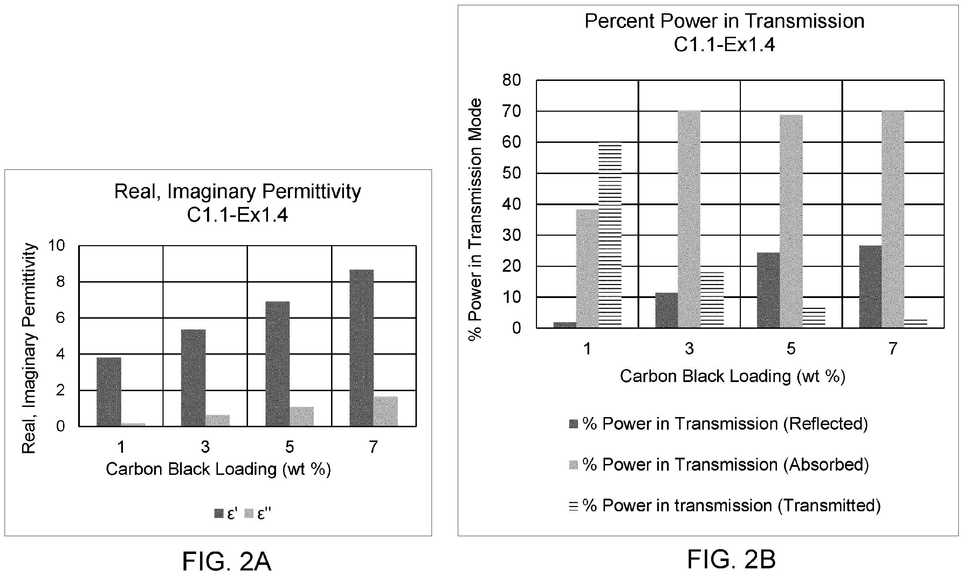

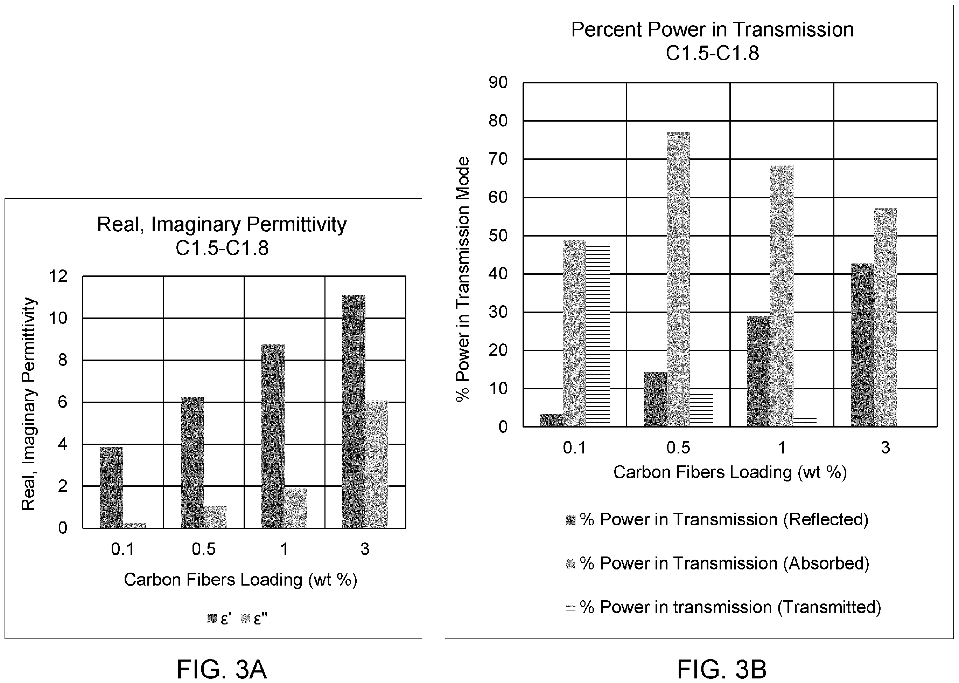

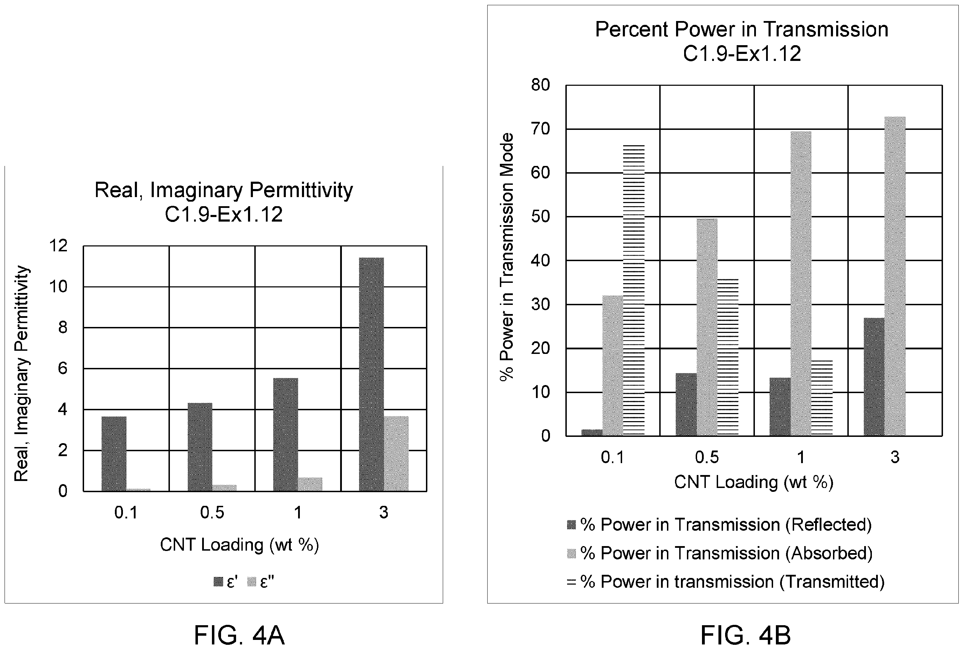

Graphical representations of some of the properties of Tables 5A and 5B are provided in FIGS. 2A-4B. As demonstrated in Tables 5A and 5B and these figures, the real and imaginary parts of the complex dielectric permittivity, ε' and ε", all increased as the concentration of carbon filler in the formulation increased. The Dissipation Factor, (ε"/ ε') or tan δ, also followed the same trend. The Attenuation Constant varied between about -4.5 and -124 dB/cm, and the Total Shielding Effectiveness varied between about 1.8 and 42 dB when observed at 77 GHz frequency.

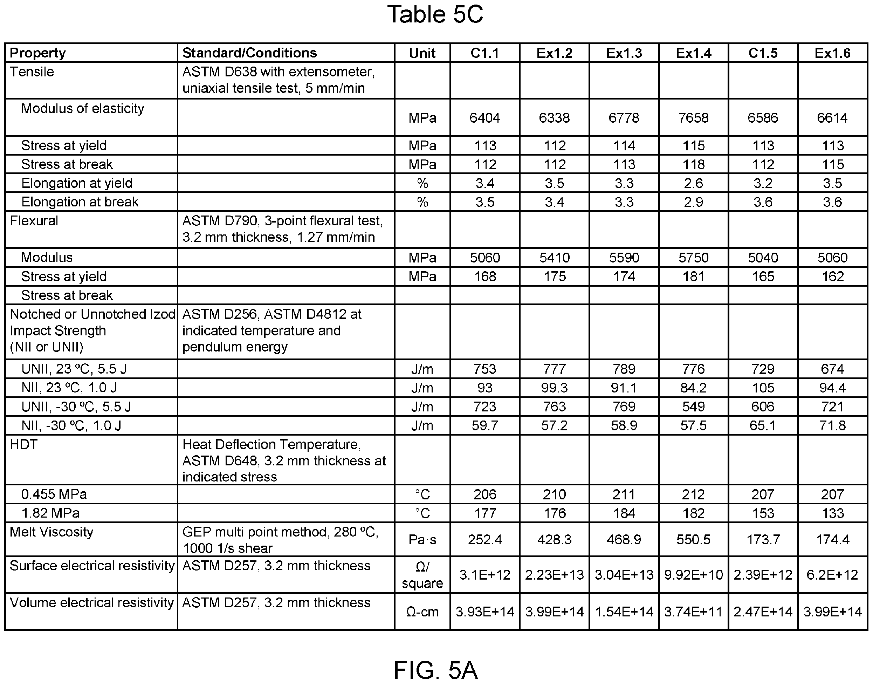

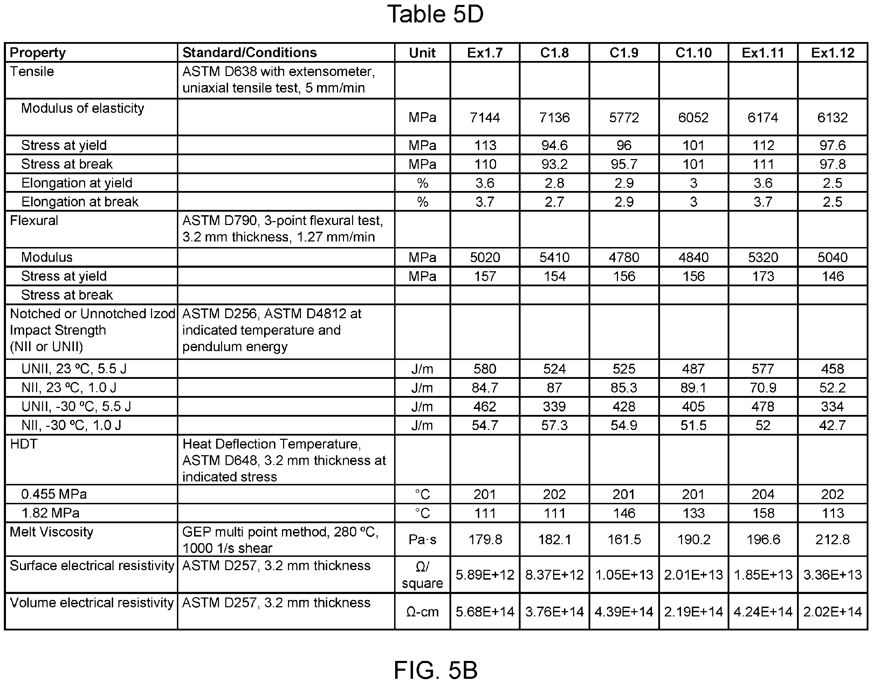

Mechanical properties of the Example 1 compositions were also evaluated; results are shown in Tables 5C and 5D (FIGS. 5A and 5B).

### Example 2

The compositions in Example 1 (Tables 4A and 4B) showed a maximum microwave absorption at 77 GHz of 72.8% when 3 wt% of carbon nanotubes were used in the formulation. To explore whether 3 wt% is an optimum concentration of nanotubes to maximize microwave absorption at 77 GHz, the formulations in Table 6 were prepared; these compositions include polyamide/nylon 6 and between 15 wt% and 50 wt% of a masterbatch including 20 wt% of the Hyperion CNTs. These masterbatch loadings corresponded to a concentration of nanotubes in the final formulation of 3, 5, 7, and 10 wt%, respectively:

**Table 6 - Additional Nylon-Based Compositions**

| **Component** | **Ex2.1** | **Ex2.2** | **Ex2.3** | **C2.4** |
|---|---|---|---|---|
| PA6 | 65 | 55 | 45 | 30 |
| PC-Si (40) | 10 | 10 | 10 | 10 |
| CNT MB 1 | 15 | 25 | 35 | 50 |
| GF | 10 | 10 | 10 | 10 |
| **Total (wt%)** | 100 | 100 | 100 | 100 |
| **CNTs in blend (wt%)** | 3 | 5 | 7 | 10 |

Various microwave properties of the Table 6 compositions were tested at a frequency of 77 gigahertz (GHz); results are shown in Table 7:

**Table 7 - Dielectric/Microwave Properties of Table 6 Compositions**

| **Properties** | **Ex2.1** | **Ex2.2** | **Ex2.3** | **C2.4** |
|---|---|---|---|---|
| ε' | 6.285 | 8.915 | 12.061 | 18.979 |
| ε" | 0.848 | 1.756 | 2.900 | 6.890 |
| ε"/ε' (tan δ) | 0.135 | 0.197 | 0.240 | 0.363 |
| Attenuation Constant (dB/cm) | -23.629 | -40.997 | -58.073 | -109.035 |
| Total Shielding Effectiveness (dB) | 8.874 | 15.180 | 20.827 | 36.761 |
| RL Measured (Metal-Backed) (dB) | -5.245 | -5.202 | -5.005 | -3.950 |
| RL Calculated (Metal-Backed) (dB) | -4.870 | -5.894 | -5.187 | -3.866 |
| % Power in Metal-Backed Reflection (Absorption) | 70.11 | 69.81 | 68.41 | 59.73 |
| % Power in Transmission (Reflected) | 16.36 | 27.83 | 33.24 | 41.36 |
| % Power in Transmission (Absorbed) | 70.67 | 69.13 | 65.93 | 58.62 |
| % Power in transmission (Transmitted) | 12.96 | 3.03 | 0.83 | 0.02 |

Table 7 shows the dielectric properties at 77 GHz of the compositions of Table 6 when interrogated by the Free Space method. As these results showed, the real and imaginary parts of the complex dielectric permittivity, ε' and ε", both increased as the concentration of carbon nanotubes in the formulation increased. The Dissipation Factor, (ε"/ ε') or tan δ, also followed the same trend. The Attenuation Constant of these compositions varied between about -24 and -109 dB/cm, and the Total Shielding Effectiveness between about 8.9 and 37 dB when observed at 77 GHz frequency. Also, these results confirmed that 3 wt% is the optimum concentration of Hyperion carbon nanotubes that maximizes microwave absorption at 77 GHz frequency (composition Ex2.1). The value of 70.7% of this Example compared fairly well with the 72.8% value obtained in composition Ex1.12 (Example 1) for the same 3 wt% concentration of Hyperion carbon nanotubes, particularly since the compositions of each example were not entirely the same. Additionally, these results showed that the microwave absorption of these materials is largely dependent on the type and loading of the carbon used to trap microwave radiation rather than the presence of other polymers or glass fibers, which are mostly transparent to microwave radiation.

These results also showed that the Percent Reflected Power at 77 GHz measured in Transmission mode increased from about 16% at 3 wt% of carbon nanotubes (Ex2.1) to about 41% at 10 wt% of nanotubes (C2.4). Similarly, the Percent Transmitted Power measured in Transmission mode decreased from about 13% at 3 wt% of nanotubes (Ex2.1) to virtually non-measurable at a nanotubes concentration of 10 wt% (C2.4). From these results-and those of Example 1-it can be concluded that the maximum Percent Absorbed power in Transmission mode of the compositions of this disclosure will occur at about 3 wt% of carbon nanotubes when the Hyperion carbon nanotubes are used in the formulation.

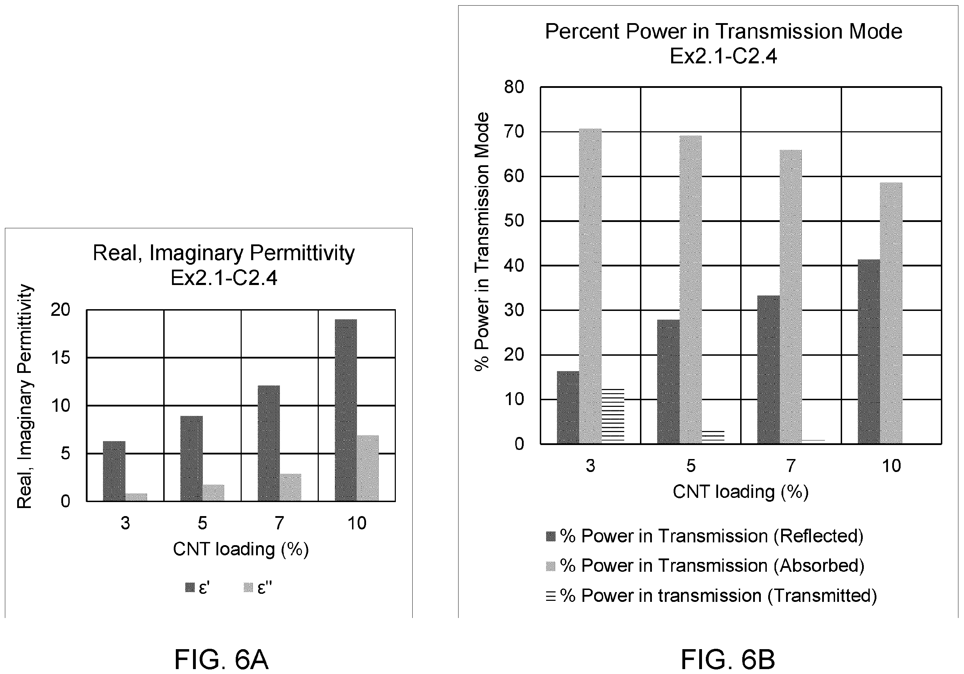

Graphical representations of some of the properties provided in Table 7 are provided in FIGS. 6A and 6B.

Mechanical properties of the Example 2 compositions were also evaluated; results are shown in Table 8:

**Table 8 - Mechanical Properties of Table 6 Compositions**

| **Property** | | **Standard/conditions** | **Unit** | **Ex2.1** | **Ex2.2** | **Ex2.3** | **C2.4** |
|---|---|---|---|---|---|---|---|
| Tensile | | ASTM D638 with extensometer, uniaxial tensile test, 5 mm/min | | | | | |
| | Modulus of elasticity | | MPa | 5300 | 5656 | 5902 | 6264 |
| | Stress at break | | MPa | 91.2 | 96.8 | 93.5 | 63.2 |
| | Elongation at break | | % | 2.1 | 2.1 | 2 | 1.1 |
| Flexural | | ASTM D790, 3-point flexural test, 3.2 mm thickness, 1.27 mm/min | | | | | |
| | Modulus | | MPa | 4860 | 5120 | 5410 | 5710 |
| | Stress at break | | MPa | 151 | 142 | 145 | 130 |
| Impact Strength | | Notched Izod Impact (NII) or Unnotched Izod Impact (UNII), ASTM D256, ASTM D4812 at indicated temperature and pendulum energy | | | | | |
| | UNII, 23 °C, 2.75 J | | J/m | 285 | 247 | 256 | 177 |
| | NII, 23 °C, 1.0 J | | J/m | 31.1 | 26 | 25.6 | 23.4 |
| | UNII, -30 °C, 2.75 J | | J/m | 293 | 226 | 245 | 153 |
| | NII, -30 °C, 1.0 J | | J/m | 27 | 26.7 | 24.6 | 22 |
| HDT | | Heat Deflection Temperature, ASTM D648, 3.2 mm thickness at indicated stress | | | | | |
| | 0.455 MPa | | °C | 212 | 213 | 211 | 211 |
| | 1.82 MPa | | °C | 165 | 176 | 159 | 153 |
| Melt Viscosity | | GEP multi point method, 280 °C 1000 1/s shear rate | Pa·s | 114.47 | 97.26 | 344.56 | 167.51 |
| Surface electrical resistivity | | ASTM D257 | Ω/square | 2.66E+13 | 1.01E+13 | 2E+07 | 12800 |
| Volume electrical resistivity | | ASTM D257, ~2.4 mm thick sample | Ω-cm | 1.01E+15 | 3.18E+13 | 2E+08 | 63600 |

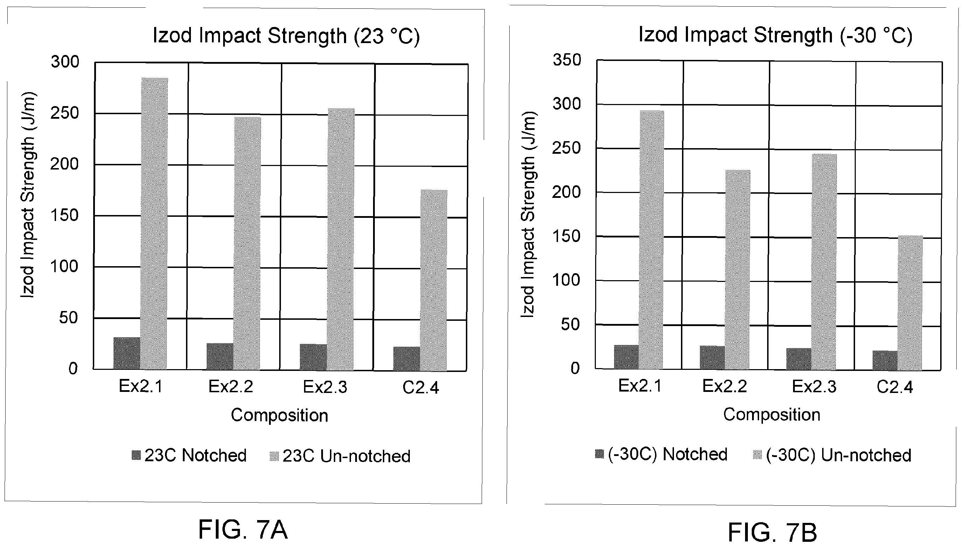

The impact strength data is shown in graphical form in FIGS. 7A and 7B. It is observed that impact strength at low temperatures is largely maintained; it is believed that this is due to the inclusion of the polycarbonate-siloxane copolymer (40 wt% siloxane) in the composition.

### Example 3

Additional compositions including a different type of CNTs were prepared as shown in Table 9:

**Table 9 - Compositions Including Plasticyl^{™} PA1701P CNTs**

| **Component** | **C3.1** | **C3.2** | **C3.3** | **Ex3.4** |
|---|---|---|---|---|
| PA6 | 79.41 | 77.06 | 74.12 | 71.18 |
| PC-Si (40) | 10 | 10 | 10 | 10 |
| CNT MB2 | 0.59 | 2.94 | 5.88 | 8.82 |
| GF | 10 | 10 | 10 | 10 |
| **Total (wt%)** | 100 | 100 | 100 | 100 |
| **CNTs in blend (wt%)** | 0.10 | 0.50 | 1.00 | 1.50 |

The Table 9 compositions included nylon 6 and different loadings of Plasticyl^{™} PA1701P, a masterbatch including nylon 6,6 and 17 wt% of NC7000 carbon nanotubes, manufactured by Nanocyl. The amounts of carbon nanotubes added to these formulations were 0.1 wt%, 0.5 wt%, 1.0 wt%, and 1.5 wt% of the total formulation.

Dielectric properties of the Table 9 compositions were evaluated at 77 GHz using the Free Space Method; results are provided in Table 10:

**Table 10 - Dielectric/Microwave Properties of Table 9 Compositions**

| **Property** | **C3.1** | **C3.2** | **C3.3** | **Ex3.4** |
|---|---|---|---|---|
| ε' | 3.265 | 4.148 | 5.137 | 6.554 |
| ε" | 0.070 | 0.262 | 0.534 | 0.993 |
| ε"/ε' (tan δ) | 0.021 | 0.063 | 0.104 | 0.152 |
| Attenuation Constant (dB/cm) | -2.715 | -9.000 | -16.471 | -27.090 |
| Total Shielding Effectiveness (dB) | 1.002 | 3.799 | 7.297 | 9.794 |
| RL Measured (Metal-Backed) (dB) | -1.198 | -5.631 | -4.387 | -7.069 |
| RL Calculated (Metal-Backed) (dB) | -0.970 | -3.455 | -21.311 | -5.122 |
| % Power in Metal-Backed Reflection (Absorption) | 24.11 | 72.65 | 63.58 | 80.36 |
| % Power in Transmission (Reflected) | 0.35 | 13.86 | 30.89 | 13.94 |
| % Power in Transmission (Absorbed) | 20.26 | 44.44 | 50.48 | 75.57 |
| % Power in transmission (Transmitted) | 79.39 | 41.70 | 18.64 | 10.49 |

These results showed that the Percent Reflected Power at 77 GHz measured in Transmission mode increased from about 0.35% at 0.1 wt% of carbon nanotubes (C3.1) to about 14% at 1.50 wt% of nanotubes (Ex3.4). Similarly, the Percent Transmitted Power measured in Transmission mode decreased from about 79% at 0.1 wt% of nanotubes (C3.1) to about 10.5% at 1.5 wt% nanotubes (Ex3.4). The Percent Absorbed Power measured in Transmission mode increased continuously from about 20% at 0.1 wt% of nanotubes (C3.1) to about 76% at 1.5 wt% nanotubes (Ex3.4). Examples 1 and 2 show that similar compositions containing 3 wt% of Hyperion carbon nanotubes absorbed approximately 70.7% and 72.8% of microwave radiation at 77 GHz, whereas the Example 3 compositions showed that only 1.5 wt% of the NC7000 nanotubes were needed to obtain a 76% microwave absorption at 77 GHz. These results highlight the effect that the type and source of carbon nanotubes used as the microwave interference filler has in the dielectric properties of these materials. From these combined results, it can be concluded that 3 wt% of the Hyperion carbon nanotubes and only 1.5 wt% of the Nanocyl carbon nanotubes are needed to achieve over 70% of microwave absorption at a 77 GHz frequency.

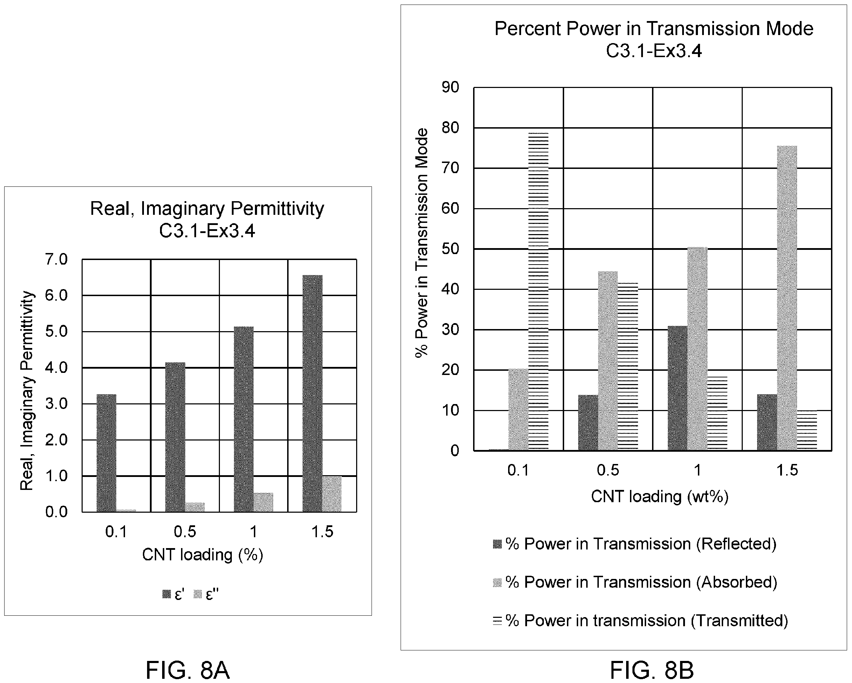

Graphical representations of some of the properties provided in Table 10 are shown in FIGS. 8A and 8B.

Mechanical properties of the Example 3 compositions were also evaluated; results are shown in Table 11:

**Table 11 - Mechanical Properties of Table 9 Compositions**

| **Property** | | **Standard/Conditions** | **Unit** | **C3.1** | **C3.2** | **C3.3** | **Ex3.4** |
|---|---|---|---|---|---|---|---|
| Tensile | | ASTM D638 with extensometer, uniaxial tensile test, 5 mm/min | | | | | |
| | Modulus of elasticity | | MPa | 5310 | 5182 | 5658 | 5322 |
| | Stress at break | | MPa | 97.2 | 97.8 | 108 | 99.2 |
| | Elongation at break | | % | 5.6 | 5.6 | 5.6 | 5.6 |
| Flexural | | ASTM D790, 3-point flexural test, 3.2 mm thickness, 1.27 mm/min | | | | | |
| | Modulus | | MPa | 4120 | 4100 | 4060 | 3910 |
| | Stress at break | | MPa | 146 | 149 | 150 | 142 |
| Impact Strength | | Notched Izod Impact (NII) or Unnotched Izod Impact (UNII), ASTM D256, ASTM D4812 at indicated temperature and pendulum energy | | | | | |
| | UNII, 23 °C, 5.5 J | | J/m | X | 498 | 587 | 475 |
| | NII, 23 °C, 1.0 J | | J/m | 55.1 | 57.7 | 55.3 | 55 |
| | UNII, -30 °C, 5.5 J | | J/m | X | 443 | 472 | 442 |
| | NII, -30 °C, 1.0 J | | J/m | 40.3 | 41.1 | 41.1 | 41.2 |
| HDT | | Heat Deflection Temperature, ASTM D648, 3.2 mm thickness at indicated stress | | | | | |
| | 0.455 MPa | | °C | 209 | 210 | 211 | 211 |
| | 1.82 MPa | | °C | 174 | 180 | 186 | 183 |
| Melt Viscosity | | GEP multi point method, 280 °C 1000 1/s shear rate | Pa·s | 114.45 | 193.4 | 196.09 | 193.19 |
| Surface electrical resistivity | | ASTM D257 | Ω/square | 6.22E+13 | 5.33E+13 | 1.44E+14 | 4.99E+13 |
| Volume electrical resistivity | | ASTM D257, ~3.0 mm sample | Ω-cm | 1.11E+15 | 6.99E+14 | 4.23E+14 | 5.73E+14 |

The values of electrical resistivities measured on these samples suggest that the concentration of CNTs in these compositions was below the level required to achieve percolation of the carbon filler network. In other words, these values would be located in the flat insulating plateau of the percolation curve (low concentration of filler) when electrical resistivity is plotted against carbon concentration.

### Example 4

Additional compositions including different loadings of synthetic graphite (Asbury 1125) and a different polycarbonate-siloxane copolymer having a 20 wt% siloxane content were prepared as shown in Table 12:

**Table 12 - Compositions Including Graphite**

| **Component** | **C4.1** | **C4.2** | **C4.3** | **C4.4** | **C4.5** | **C4.6** |
|---|---|---|---|---|---|---|
| PA6 | 60 | 55 | 50 | 45 | 40 | 35 |
| PC-Si (20) | 15 | 15 | 15 | 15 | 15 | 15 |
| GF | 20 | 20 | 20 | 20 | 20 | 20 |
| Graphite | 5 | 10 | 15 | 20 | 25 | 30 |
| Total (wt%) | 100 | 100 | 100 | 100 | 100 | 100 |

As noted, the amount of graphite added to these formulations varied from 5-30 wt%. Dielectric properties of the Table 12 compositions were evaluated at 77 GHz using the Free Space Method; results are provided in Table 13:

**Table 13 - Dielectric/Microwave Properties of Table 12 Compositions**

| **Property** | **C4.1** | **C4.2** | **C4.3** | **C4.4** | **C4.5** | **C4.6** |
|---|---|---|---|---|---|---|
| ε' | 7.608 | 14.332 | 24.844 | 37.893 | 58.857 | 76.779 |
| ε" | 0.198 | 0.646 | 1.681 | 3.048 | 6.399 | 9.735 |
| ε"/ε' (tan δ) | 0.026 | 0.045 | 0.068 | 0.080 | 0.109 | 0.127 |
| Attenuation Constant (dB/cm) | -5.035 | -11.951 | -23.604 | -34.642 | -58.327 | -77.651 |
| Total Shielding Effectiveness (dB) | 3.517 | 6.553 | 12.386 | 17.576 | 26.716 | 32.852 |
| RL Measured (Metal-Backed) (dB) | -11.952 | -2.137 | -2.500 | -3.535 | -2.342 | -2.173 |
| RL Calculated (Metal-Backed) (dB) | -1.583 | -2.294 | -3.589 | -2.758 | -2.250 | -1.964 |
| % Power in Metal-Backed Reflection (Absorption) | 93.62 | 38.86 | 43.76 | 55.69 | 41.68 | 39.37 |
| % Power in Transmission (Reflected) | 23.84 | 33.53 | 50.99 | 46.81 | 59.01 | 61.73 |
| % Power in Transmission (Absorbed) | 31.67 | 44.36 | 43.24 | 51.45 | 40.78 | 38.22 |
| % Power in transmission (Transmitted) | 44.50 | 22.11 | 5.77 | 1.75 | 0.21 | 0.05 |

These results in Table 13 show that the Percent Reflected Power at 77 GHz measured in Transmission mode increased from about 24% at 5 wt% of graphite (C4.1) to about 62% at 30 wt% of graphite (C4.6). Similarly, the Percent Transmitted Power measured in Transmission mode decreased from about 44.5% at 5 wt% of graphite (C4.1) to less than about 0.1% at 30 wt% of graphite (C4.6). The Percent Absorbed Power measured in Transmission mode increased from about 31.7% at 5 wt% of graphite (C4.1) to about 38.2% at 30 wt% of graphite (C4.6), going through a maximum absorption of 51.5% at 20 wt% of graphite (C4.4). These results demonstrate the effect that the type of microwave absorbing carbon filler has in the dielectric properties of these materials. It was previously shown that compositions including 3 wt% of Hyperion carbon nanotubes and only 1.5 wt% of Nanocyl carbon nanotubes could achieve over 70% of microwave absorption at a 77 GHz frequency. When synthetic graphite was used as the microwave absorbing filler in similar compositions, 20wt% of graphite was needed to absorb only 51.5% of microwave radiation at 77 GHz frequency. Moreover, none of the graphite-based compositions had a microwave absorption of at least 65% when observed according to a Free Space method at a frequency of 77 GHz.

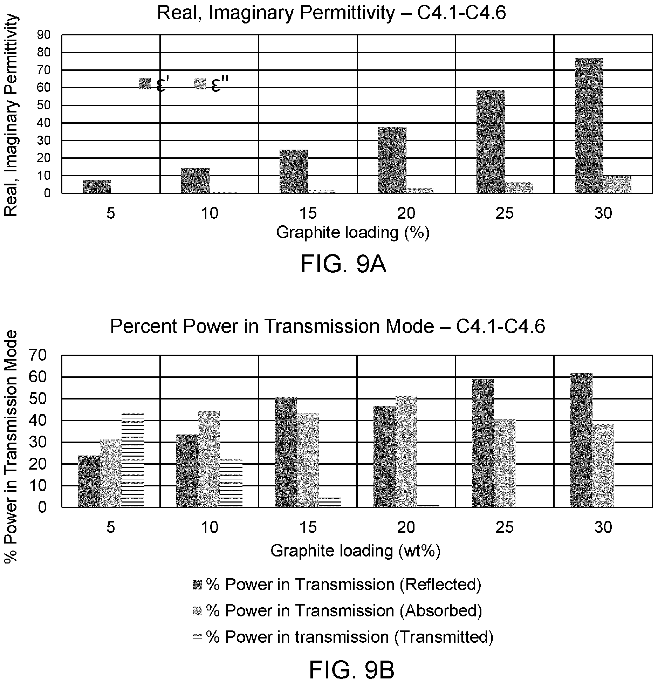

Graphical representations of some of the properties provided in Table 13 are shown in FIGS. 9A and 9B.

These results highlight the fact that simply adding a carbon filler to a polymer does not ensure a high absorption of microwaves at the high frequencies interrogated. The type and concentration of each microwave absorbing filler may be selected to achieve the desired power absorption. Even with the two grades of carbon nanotubes, a different concentration of filler may be needed to achieve a similar microwave absorption performance.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
a) from about 30 wt% to about 85 wt% of a polyamide resin;
b) from about 1 wt% to about 25 wt% of a polycarbonate-siloxane copolymer;
c) from about 5 wt% to about 40 wt% of a glass fiber; and
d) from about 0.01 wt% to less than 10 wt% of a carbon-based filler having a surface area of at least 5 m²/g (square meters per gram),
wherein
surface area is determined using a Brunauer-Emmett-Teller (BET) surface area analysis,
the composition exhibits a volume electrical resistivity of at least 1.0E+08 Ohm.cm as determined according to ASTM D257,
the composition exhibits an ε' (real part of complex dielectric permittivity) of at least 5 and an ε" (imaginary part of complex dielectric permittivity) of no more than 4, wherein ε' and ε" are evaluated according to a Free Space Method,
a molded sample of the composition exhibits a percent Absorbed Power measured in Transmission mode of at least 65% when observed according to a Free Space method at a frequency of 77 GHz, and
the combined weight percent value of all components does not exceed 100 wt. %, and all weight percent values are based on the total weight of the composition.

2. The thermoplastic composition according to claim 1, wherein the carbon-based filler comprises multi-wall carbon nanotubes (MWCNTs).

3. The thermoplastic composition according to claim 2, wherein the composition further comprises graphite, carbon fiber, carbon black, or a combination thereof.

4. The thermoplastic composition according to any of claims 1 to 3, wherein the polycarbonate-siloxane copolymer has a siloxane content of from 5 wt% to 45 wt%.

5. The thermoplastic composition according to claim 4, wherein the polycarbonate-siloxane copolymer has a siloxane content of from 35 wt% to 45 wt%.

6. The thermoplastic composition according to any of claims 1 to 5, wherein the composition comprises from about 10 wt% to about 20 wt% of the glass fiber.

7. The thermoplastic composition according to any of claims 1 to 6, wherein the glass fiber comprises round glass fiber, flat glass fiber, or a combination thereof.

8. The thermoplastic composition according to any of claims 1 to 7, wherein the composition has a total siloxane content of from about 4 wt% to about 6 wt%.

9. The thermoplastic composition according to any of claims 1 to 8, wherein a molded sample of the composition exhibits a percent Absorbed Power measured in Transmission mode of at least 70% when observed according to a Free Space method at a frequency of 77 GHz.

10. The thermoplastic composition according to any of claims 1 to 9, wherein the polyamide resin comprises polyamide 6 (PA6), polyamide 6,6 (PA66), polyamide 6,12, polyamide 6,10, polyamide 10,10, polyamide 4,10, polyamide 4,6, aromatic polyamide, semi-aromatic polyamide, a polyamide copolymer, or a combination thereof.

11. The thermoplastic composition according to any of claims 1 to 10, wherein the composition comprises no more than 0.5 wt% of a carbon fiber, and wherein the composition exhibits a percent Absorbed Power measured in Transmission mode of at least 75% when observed according to a Free Space method at a frequency of 77 GHz.

12. The thermoplastic composition according to any of claims 1 to 11, wherein the composition comprises no more than 3 wt% of carbon black, and wherein the composition exhibits a percent Absorbed Power measured in Transmission mode of at least 70% when observed according to a Free Space method at a frequency of 77 GHz.

13. The thermoplastic composition according to any of claims 1 to 12, wherein:
the carbon-based filler comprises MWCNTs comprising a surface area of from 200-250 m²/g, the composition comprises from greater than 1 wt% to about 5 wt% of the MWCNTs, and the composition exhibits a percent Absorbed Power measured in Transmission mode of at least 70% when observed according to a Free Space method at a frequency of 77 GHz; or
the carbon-based filler comprises MWCNTs comprising a surface area of from 250-300 m²/g, the composition comprises from about 1 wt% to about 2 wt% of the MWCNTs, and the composition exhibits a percent Absorbed Power measured in Transmission mode of at least 75% when observed according to a Free Space method at a frequency of 77 GHz.

14. An article comprising the thermoplastic composition according to any of claims 1 to 13, wherein the article is a component of a radar sensor, camera, or electronic control unit (ECU).

15. The article according to claim 14, wherein the article comprises at least two openings to allow a transmission of microwave radiation between a transmitting antenna and a receiving antenna located in a printed circuit board of the article.
